# EUROPEAN PATENT SPECIFICATION

(11) **EP 3 610 344 B1**
(45) Date of publication and mention of the grant of the patent: **23.03.2022**
(21) Application number: 18818920.3
(22) Date of filing: 14.06.2018
(51) Int. Cl.: G05D 1/02, H02J 7/00, G05D 1/00, H02J 13/00, H02J 50/10, H02J 50/60, H02J 50/80, H02J 50/90

(54) **MOBILE POWER SUPPLY DEVICE FOR OUTDOOR POWER SUPPLY**
MOBILE VORRICHTUNG FÜR AUSSENSTROMVERSORGUNG
DISPOSITIF MOBILE D'ALIMENTATION ÉLECTRIQUE EXTÉRIEURE

(30) Priority: 15.06.2017 CN 201710453148
(43) Date of publication of application: 19.02.2020
(73) Proprietor: Zhejiang Geely Holding Group Co., Ltd., Zhejiang 310051 (CN); Zhejiang Geely Automobile Research Institute Co., Ltd., Taizhou, Zhejiang 317000 (CN)
(72) Inventor: LI, Shufu, Hangzhou Zhejiang 310051 (CN)
(74) Representative: Zaboliene, Reda
(86) International application number: PCT/CN2018/091216
(87) International publication number: WO 2018/228462

(56) References cited:
- EP-A1- 2 463 052
- CN-A- 104 049 633
- CN-A- 105 468 003
- CN-A- 105 911 999
- CN-A- 105 911 999
- CN-A- 106 054 897
- CN-A- 106 314 191
- CN-A- 106 314 191
- CN-A- 107 181 299
- CN-U- 204 452 083
- CN-U- 206 049 480
- CN-U- 206 049 480
- US-A1- 2013 274 987
- US-B1- 9 592 742
- US-B2- 7 635 921

## Description

### Technical Field

The present application relates to mobile power supply device, and particularly to a mobile power supply device for outdoor power supply.

### Background Art

In outdoor agriculture and forestry work, various tools are often used, such as saws, blowers, pumps, lawn mowers, etc. These tools usually are divided into two types, one type using internal combustion engines and the other type using electricity. In recent years, considerable progress has been made in battery technology, and a variety of rechargeable electric tools have appeared, for example, electric saws, electric lawn mowers, etc. Rechargeable electric tools are popular because of the advantages of lightness, energy saving and environmental protection, low noise, and easy maintenance.

CN106314191A discloses a tracking power supply system for an electric car comprising a movable power supply car and the electric car. The movable power supply car provides electric power for the electric car if the electric car is lack of electricity. The movable power supply car is provided with a driving device and an automatic tracking driving control device.

CN105911999A discloses a mobile luggage case with automatic following and obstacle avoiding functions. The mobile luggage case with automatic following and obstacle avoiding functions is able to adapt to a complex environment, the obstacle can be avoided safely and reliably, the pedestrian can be followed, and great convenience is brought to travelling of the pedestrian.

US2013274987A1 discloses a luggage case moving method includes obtaining an image captured by a camera. The image includes a distance information indicating distances between the camera and objects captured by the camera. The method controls the driving unit to drive the luggage case to move toward the determined moving direction of the target person.

US9592742B1 discloses an electric vehicle charger comprising: an electric power supply; a power coupling element connected with the electric power supply to transfer electric energy to an electric vehicle; a motorized cart having the electric power supply mounted thereon and a control and communication system connected with the motorized cart so that the electric vehicle charger can move by remote control and/or commands from the control and communication system.

CN206049480U discloses a mobile charging car, including a travelling car and a power supply. The power supply is located in the travelling car. The mobile charging car can charge for an electric vehicle to be charged, so as to reduce the charging cost of the electric vehicle.

CN204452083U discloses a movable rechargeable robot comprising a robot body, a wheel type travelling mechanism, and a control unit. The control unit is used for controlling the wheel type travelling mechanism to move to the parking location of an electric vehicle for charging the electric vehicle.

### Technical Problem

However, the power of rechargeable electric tools is relatively small. In some working environments, the rechargeable electric tools with small power may not be used. If a high-power electric tool is used, the battery of such an electric tool will be heavy, and the electric tool with the heavy battery will be difficult to be carried. Although plug-in electric tools are of high power, they are limited to power supply and cannot be used outdoors.

With the development of battery technology, motor technology and electronic control technology, not only the technology of lithium battery is mature, but also the price is getting lower and lower. If there is a kind of mobile power supply device which can work outdoors and is easy to carry and transport, it not only can satisfy the need of high-power electric tools during outdoor work, but also help to improve the quality of working environment for the workers, to reduce labor intensity and reduce environmental pollution.

### Technical Solution

In view of the above, the present application provides a mobile power supply device for outdoor power supply. The mobile power supply device can move on its own, easy to transport, and is provided with a large capacity battery. Therefore, the mobile power supply device is suitable for power supply for high-power electric tools during outdoor work.

In an embodiment, the present application provides a mobile power supply device for outdoor power supply, which includes a housing, a battery pack, a driving device, a controller and a tracking device. The battery pack is disposed inside the housing. The housing is provided with at least one socket electrically connected with the battery pack. The driving device includes wheels and driving motors for driving the wheels. The controller is connected with the driving motors. The tracking device is connected with the controller. The battery pack is used to supply electric power to an electric tool which is an electric saw, a blower, a pump or an electric lawn mower during outdoor work through the at least one socket. The tracking device is used to track the user of the mobile power supply device. The controller controls the driving device to drive the housing to automatically follow the user according to the tracking result of the tracking device.

In an embodiment, the present application further provides a system which includes an electric tool and a mobile power supply device as described above, wherein the electric tool is an electric saw, a blower, a pump or an electric lawn mower, and the mobile power supply device is used for supplying power to the electric tool during outdoor work when the electric tool is connected to the at least one socket.

### Advantageous Effects

The mobile power supply device provided by the embodiments of the present application can automatically follow the user or can move under the manipulations of the user. Therefore, plug-in type high power electric tool can be used, and no battery is required to install in the electric tool, so that the weight of the electric tool is greatly reduced. The quantity of the battery pack in the housing can be selected according to the need of power and consumption of electricity. Since the battery pack does not need manual movement, the labor intensity of the worker is greatly reduced, to thereby solve the problem that the battery pack is too heavy and inconvenient to carry. Since the mobile power supply device can move on its own, it can be used conveniently for power supply to various electric tools during outdoor work.

### Description of Drawings

FIG. 1 is a front view of a mobile power supply device according to an embodiment of the present application.
FIG. 2 is a side view of the mobile power supply device of FIG. 1.
FIG. 3 is a side view of the mobile power supply device of FIG. 1 by removing the side plate and opening the top plate.
FIG. 4 is a top view of the mobile power supply device of FIG. 1 by removing the top plate.
FIG. 5 is a view showing that the mobile power supply device of FIG. 1 is connected with an electric tool for power supply.
FIG. 6 is a side view of a mobile power supply device according to another embodiment of the present application.
FIG. 7 is a block diagram of a mobile power supply device according to an embodiment of the present application.
FIG. 8 is a block diagram of the tracking device according to an example of the present application.
FIG. 9 is a block diagram of the tracking device according to another example of the present application.
FIG. 10 is a block diagram of the tracking device according to another example of the present application.
FIG. 11 is a block diagram of the tracking device according to a further example of the present application.
FIG. 12 is a block diagram of a mobile power supply device according to another embodiment of the present application.
FIG. 13 is a block diagram of a mobile power supply device according to a possible realization which is not part of the present application.
FIG. 14 is a block diagram of a mobile power supply device according to another embodiment of the present application.
FIG. 15 is a block diagram of a mobile power supply device according to a further embodiment of the present application.
FIG. 16 is a side view of a mobile power supply device according to another embodiment of the present application.
FIG. 17 is a side view of a mobile power supply device according to another embodiment of the present application.

### Mode for Invention

In order to make the purposes, characteristics, and advantages of the present application more apparently, embodiments of the present application will now be described in more detail with reference to the drawing figures.

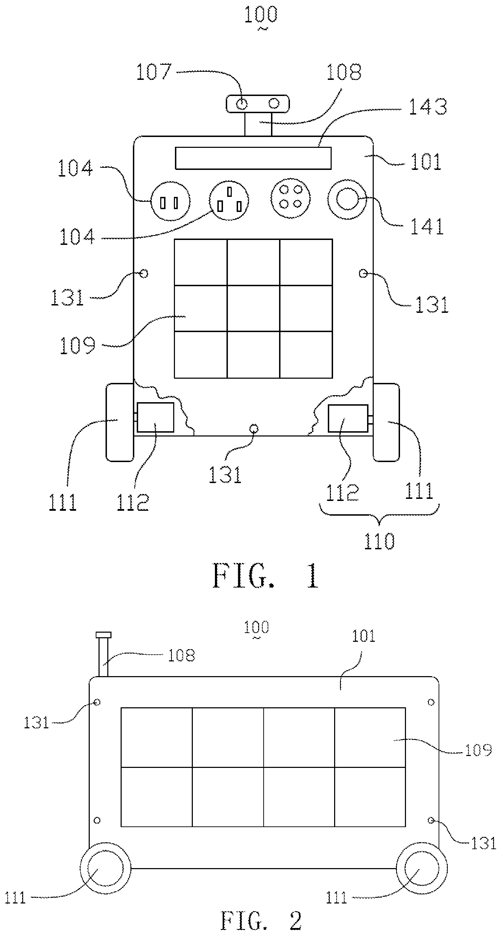

Referring from FIG. 1 to FIG. 5, a mobile power supply device 100 for outdoor power supply is provided in an embodiment of the present application. The mobile power supply device 100 includes a housing 101, a battery pack 102, a driving device 110, a controller 103, and a tracking device 120. The battery pack 102 is disposed inside the housing 101. The housing 101 is provided with at least one socket 104 electrically connected with the battery pack 102. The battery pack 102 can supply electric power to an electric tool 200 during outdoor work through the socket 104. The driving device 110 includes wheels 111 and driving motors 112 for driving the wheels 111. The controller 103 is connected with the driving motors 112. The tracking device 120 is connected with the controller 103. The tracking device 120 is used to track the user of the mobile power supply device 100 (i.e., the worker), the controller 103 controls the driving motors 112 to operate according to the tracking result of the tracking device 120, and accordingly the driving motors 112 drive the wheels 111 to rotate, so that the housing 101 is driven to automatically follow the user to keep the distance between the housing 101 and the user in a preset range. The preset range is, for example, 2-6 meters. By keeping the housing 101 at a certain distance from the user, the working space is not occupied by the housing 101, which is conducive to improving the convenience during outdoor work.

In the embodiment, the tracking device 120 can detect the distance between the housing 101 and the user. When the tracking device 120 detects that the distance between the housing 101 and the user is within the range of 2-6 meters, the controller 103 controls the driving device 110 to stop, and accordingly the housing 101 stands still. Hence, even if the user moves in a small range, as long as the distance between the housing 101 and the user is still within the range of 2-6 meters, the housing 101 may stand still without following the movement of the user, in order to minimize the movement of the housing 101 and reduce the power consumption of the mobile power supply device 100. When the tracking device 120 detects that the distance between the housing 101 and the user is beyond the range of 2-6 meters, the controller 103 immediately controls the driving device 110 to operate in order to drive the housing 101 to follow the user, until the distance between the housing 101 and the user reaches the range of 2-6 meters. Thus, by automatically tracking the user, the distance between the housing 101 and the user is always within the preset range of 2-6 meters.

In the embodiment, under the control of the tracking device 120 and the controller 103, the housing 101 which carries the battery pack 102 can follow the user automatically. That is, where the user goes, where the housing 101 follows. Therefore, plug-in type high power electric tool 200 can be used, and no battery is required to install in the electric tool 200, so that the weight of the electric tool 200 is greatly reduced. The quantity of the battery pack 102 in the housing 101 can be selected according to the need of power and consumption of electricity. Since the battery pack 102 does not need manual movement, the labor intensity of the worker is greatly reduced, to thereby solve the problem that the battery pack 102 is too heavy and inconvenient to carry. Since the mobile power supply device 100 can move on its own, it can be used conveniently for power supply to various electric tools 200 during outdoor work.

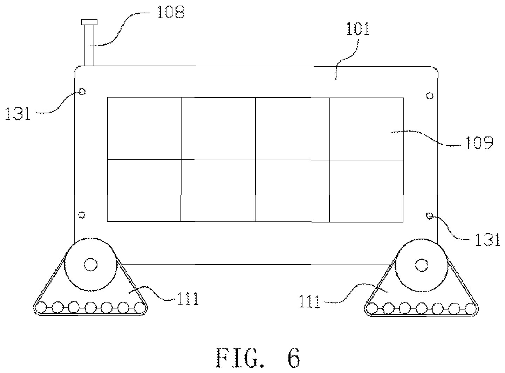

Specifically, the driving device 110 is provided at the bottom of the housing 101. The driving device 110 may include four wheels 111, and the four wheels 111 may include driving wheels and driven wheels, wherein two wheels 111 may be driving wheels and the other two wheels 111 may be driven wheels. Each driving wheel is driven correspondingly by a driving motor 112. Each driving motor 112 is powered by the battery pack 102 in the housing 101. Furthermore, the wheels 111 are detachably mounted to the housing 101, which is conducive to changing the type of the wheels 111, so that the mobile power supply device 100 can adapt to different roads, to improve the adaptability to working environments. In one embodiment, as shown in FIG. 1 and FIG. 2, the wheels 111 may be inflatable wheels or solid wheels, to adapt for relatively flat roads. In another embodiment, as shown in FIG. 6, the wheels 111 may be crawler wheels, to adapt for roads having potholes or slopes.

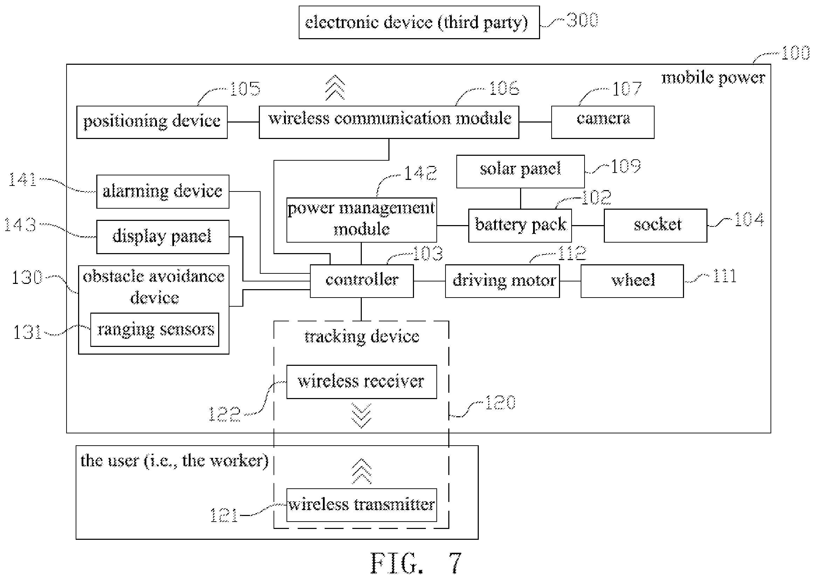

In the embodiment, as shown in FIG. 7, the tracking device 120 includes a wireless transmitter 121 and a wireless receiver 122, one of the wireless transmitter 121 and the wireless receiver 122 is carried by the user, and the other one of the wireless transmitter 121 and the wireless receiver 122 is carried by the housing 101. For example, the wireless transmitter 121 is carried by the user, and the wireless receiver 122 is carried by the housing 101, but it is not limited thereto. Furthermore, the wireless transmitter 121 may be integrated in a smart phone or a smart wearable device of the user, wherein the smart wearable device may be a smart watch, a smart hand ring, etc. Of course, the wireless transmitter 121 may also be provided independently.

The wireless receiver 122 receives signals sent from the wireless transmitter 121, and the tracking device 120 detects a distance between the housing 101 and the user based on the signal intensity received by the wireless receiver 122, to realize tracking the user automatically. In order to track the user, the tracking device 120 may use the theory of locating based on received signal strength indicator (RSSI). In the theory of RSSI locating, the intensity of signals emitted by the emitting node (i.e., the wireless transmitter 121) is known, the receiving node (i.e., the wireless receiver 122) calculates the attenuation of the signals in the process of transmission based on the intensity of the received signals, and the distance between the two nodes is calculated out according to the relationship between the signal attenuation and the transmission distance.

Specifically, the tracking device 120 may use at least one of the following tracking and locating technologies, including WiFi, bluetooth, ultrared, ultrasonic, GPS, RFID, and ZigBee. Thus, the wireless transmitter 121 and the wireless receiver 122 may be WiFi module, bluetooth module, infrared module, ultrasonic module, GPS module, RFID module, or ZigBee module.

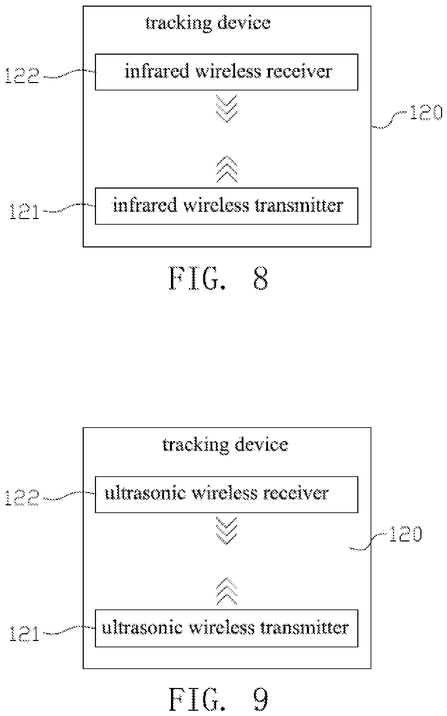

In a specific example, as shown in FIG. 8, the wireless transmitter 121 is an infrared wireless transmitter, and the wireless receiver 122 is an infrared wireless receiver. In use, the infrared wireless transmitter 121 is carried by the user, and the infrared wireless receiver 122 is carried by the housing 101. The infrared wireless transmitter 121 sends infrared signals automatically to the housing 101 for locating. The infrared wireless receiver 122 in the housing 101 receives the infrared signals sent by the infrared wireless transmitter 121 from the user, and the location of the user is obtained in real time based on RSSI. Thereafter, the controller 103 regulates the moving speed and direction of the housing 101 and controls the housing 101 to automatically follow the user.

In another specific example, as shown in FIG. 9, the wireless transmitter 121 is an ultrasonic wireless transmitter, and the wireless receiver 122 is an ultrasonic wireless receiver. In use, the ultrasonic wireless transmitter 121 is carried by the user, and the ultrasonic wireless receiver 122 is carried by the housing 101. The ultrasonic wireless transmitter 121 sends ultrasonic signals automatically to the housing 101 for locating. The ultrasonic wireless receiver 122 in the housing 101 receives the ultrasonic signals sent by the ultrasonic wireless transmitter 121 from the user, and the location of the user is obtained in real time based on RSSI. Thereafter, the controller 103 regulates the moving speed and direction of the housing 101 and controls the housing 101 to automatically follow the user.

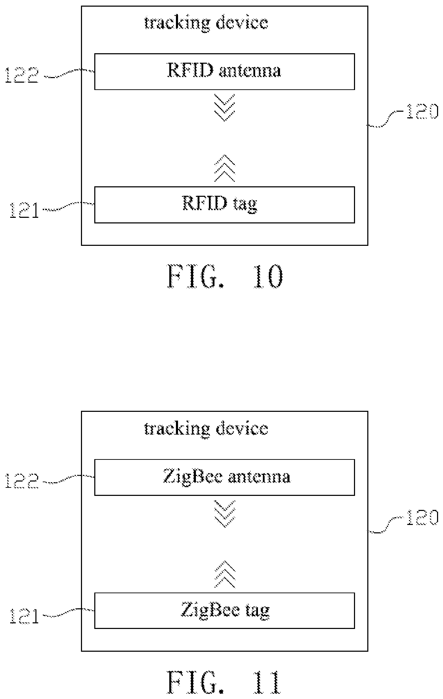

In another specific example, as shown in FIG. 10, the wireless transmitter 121 is a RFID (radio frequency identification) tag, and the wireless receiver 122 is a RFID antenna. In use, the RFID tag 121 is carried by the user, and the RFID antenna 122 is carried by the housing 101. The RFID tag 121 sends signals automatically to the housing 101 for locating. The RFID antenna 122 in the housing 101 receives the signals sent by the RFID tag 121 from the user, and the location of the user is obtained in real time based on RSSI. Thereafter, the controller 103 regulates the moving speed and direction of the housing 101 and controls the housing 101 to automatically follow the user.

In a further specific example, as shown in FIG. 11, the wireless transmitter 121 is a ZigBee tag, and the wireless receiver 122 is a ZigBee antenna. In use, the ZigBee tag 121 is carried by the user, and the ZigBee antenna 122 is carried by the housing 101. The ZigBee tag 121 sends signals automatically to the housing 101 for locating. The ZigBee antenna 122 in the housing 101 receives the signals sent by the ZigBee tag 121 from the user, and the location of the user is obtained in real time based on RSSI. Thereafter, the controller 103 regulates the moving speed and direction of the housing 101 and controls the housing 101 to automatically follow the user.

As shown in FIG. 7, the mobile power supply device 100 further includes an obstacle avoidance device 130, and the obstacle avoidance device 130 is connected with the controller 103. The obstacle avoidance device 130 can detect the obstacles existed in a surrounding environment of the housing 101. In the course of tracking the user, the controller 103 controls the housing 101 to keep away from the obstacles according to the detected obstacle information. By using the obstacle avoidance device 130 to detect the obstacle information in the surrounding environment of the housing 101, the housing 101 can realize the function of active collision prevention, which greatly improves the safety in the course of automatically tracking the user.

The obstacle avoidance device 130 includes a plurality of ranging sensors 131, and the ranging sensors 131 are distributed over the outer surfaces of the housing 101, as shown in FIGs. 1-2. Specifically, the ranging sensor 112 may be selected from infrared ranging sensor, ultrasonic ranging sensor, laser ranging sensor, and microwave radar ranging sensor. Since the ranging sensors 131 are distributed on the outer surfaces of the housing 101, the ranging sensors 131 can sense the obstacles around the housing 101. The distance measurement theory of the ranging sensor 131 is as follows. A propagation speed of a wireless signal (e.g., infrared, ultrasonic, laser, microwave) emitted by the ranging sensor 131 is known in the air, the time is measured when the wireless signal is reflected back after emission, and the actual distance between the emitting point and the obstacle is calculated based on the time difference between the emission and the reception of the signal.

As shown in FIG. 7, the mobile power supply device 100 further includes a positioning device 105 and a wireless communication module 106. The positioning device 105 is used to obtain the current position of the mobile power supply device 100, and the wireless communication module 106 sends the current position information of the mobile power supply device 100 to an electronic device 300 of a third party (e.g., the manager responsible for the outdoor work). The positioning device 105 can be global positioning system (GPS) or Beidou positioning system. The housing 101 can be positioned in real time through the positioning device 105, and the current position information of the mobile power supply device 100 can be sent to the electronic device 300 wirelessly. It is understood that, there is also a wireless communication module (not shown) on the electronic device 300 to receive the positioning data sent by the wireless communication module 106 of the mobile power supply device 100, such that the manager can understand the current position and the working progress of the mobile power supply device 100 whenever necessary.

As shown in FIG. 7, the mobile power supply device 100 further includes a camera 107. The camera 107 is used to capture the images surrounding the housing 101. The wireless communication module 106 sends the images captured by the camera 107 to an electronic device 300 of a third party (e.g., the manager responsible for the outdoor work). The onsite working progress of the worker can be captured by the camera 107, and the captured images can be sent to the electronic device 300 wirelessly, such that the manager can understand the onsite working progress conveniently, which is conducive to realizing work scheduling and statistical management among different workers.

Referring to FIGs. 1-2, the mobile power supply device 100 further includes a mounting pole 108. The mounting pole 108 is provided on the housing 101, and the camera 107 is mounted on the mounting pole 108. Preferably, the mounting pole 108 is telescopically mounted to the housing 101, so that the mounting pole 108 extends out of the housing 101 or is embedded in the housing 101. When the mounting pole 108 is embedded in the housing 101, the electronic components (e.g., the camera 107) on the mounting pole 108 are protected, to realize waterproof, dustproof, collision protection.

As shown in FIG. 7, the mobile power supply device 100 further includes a solar panel 109. The solar panel 109 is provided on the outer surfaces of the housing 101. The solar panel 109 is electrically connected with the battery pack 102. In outdoor work, the battery pack 102 can be charged by the solar panel 109, to improve power endurance of the mobile power supply device 100. Referring to FIGs. 1-2, the solar panel 109 is provided on the circumferential outer surfaces of the housing 101, and the solar panel 109 can be folded and stretched, in order to increase the effective area of the solar panel 109.

As shown in FIG. 7, the mobile power supply device 100 further includes an alarming device 141. The alarming device 141 is connected with the controller 103. The alarming device 141 can provide an alarming function. When the automatic tracking function of the housing 101 is abnormal or the system has other faults, it will automatically alarm. The alarming device 141 can be a loudspeaker alarm or a sound-light alarm.

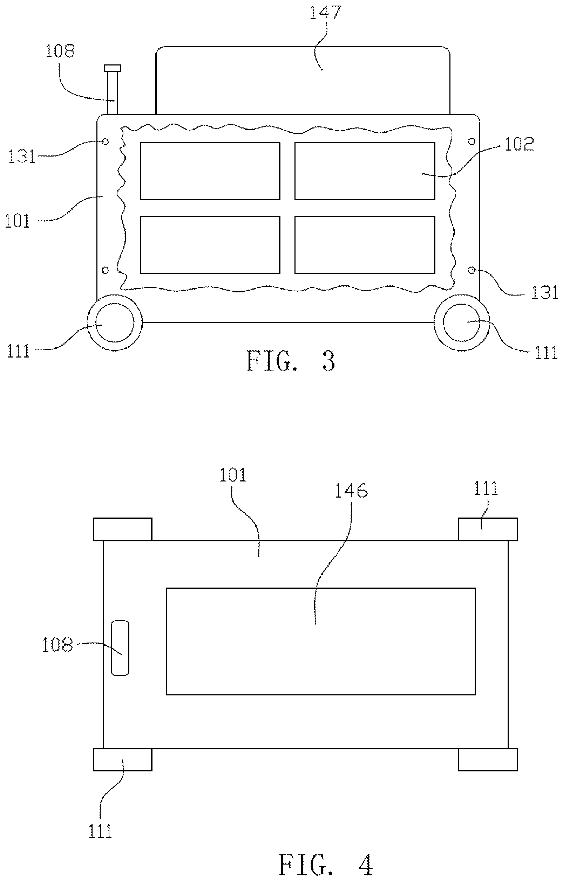

Referring to FIGs. 3-4, the housing 101 is defined with a storage tank 146 for accommodating articles including the electric tool 200. The storage tank 146 may be defined in the top surface of the housing 101, but it is not limited thereto. The storage tank 146 may also be defined in other positions of the housing 101 (e.g., the side surfaces of the housing 101). There is provided with a cover plate 147 above the storage tank 146, and by opening the cover plate 147, the articles can be put into or taken out from the storage tank 146. In this way, during the non-working time (such as going to the job site or returning home), the electric tool 200 can be carried by the housing 101 in the storage tank 146, and it is not necessary to carry the electric tool 200 manually, further reducing the labor intensity of the worker.

Referring to FIG. 1, the socket 104 provided on the housing 101 may be multiple. The multiple sockets 104 have different types or different output voltages, such that the mobile power supply device 100 can be adapted to electric tools 200 with different joint types or different working voltages, to improve the versatility of the mobile power supply device 10.

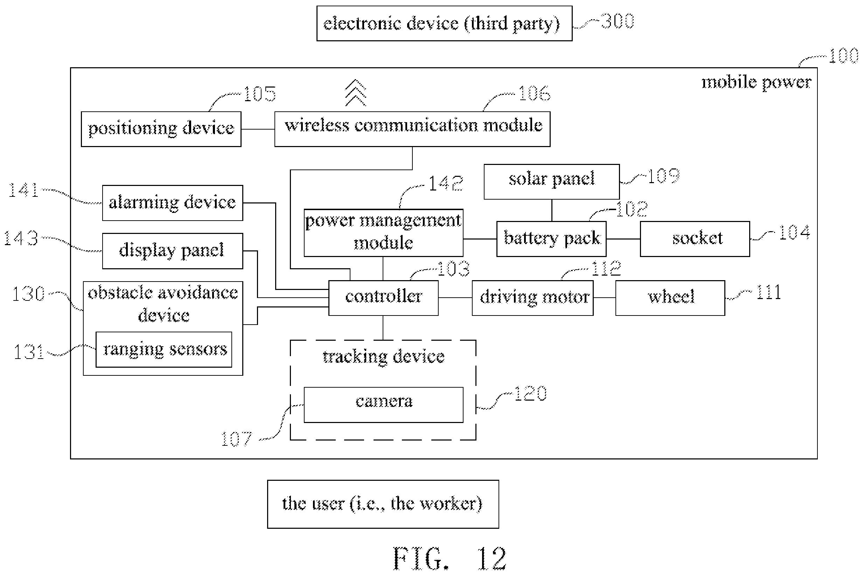

FIG. 12 provides a mobile power supply device 100 for outdoor power supply according to another embodiment. As shown in FIG. 12, the tracking device 120 includes a camera 107, and the camera 107 is used to capture the images of the user (i.e., the worker), to realize tracking the user automatically through image recognition. In this way, the tracking device 120 tracks the target (i.e., the worker) by using the camera 107, so that the user does not need to wear any auxiliary equipment, to improve the convenience of the outdoor work. In the embodiment, on one hand, the camera 107 is used to track the working worker, and on the other hand, the image information captured by the camera 107 may also be sent to an electronic device 300 of a third party through the wireless communication module 106 to facilitate the manager to understand the working progress on the spot.

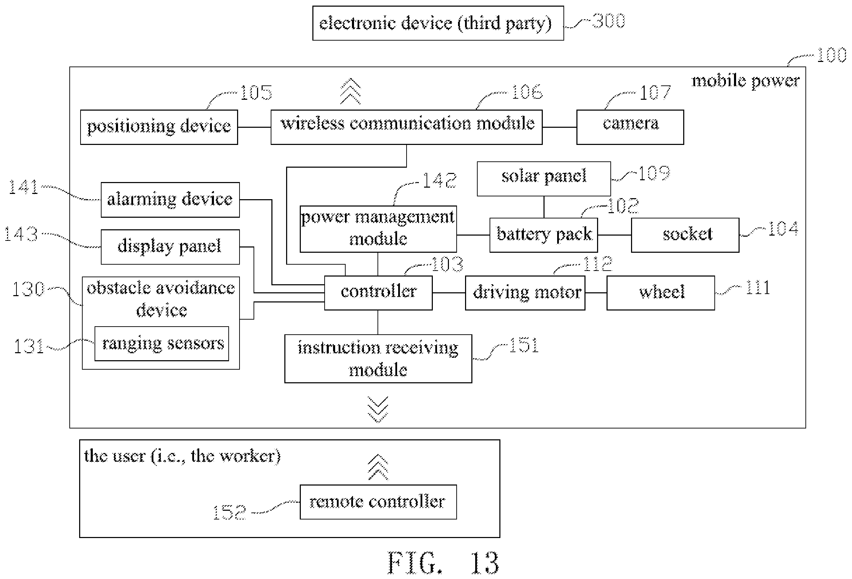

FIG. 13 provides a mobile power supply device 100 for outdoor power supply and does not form an embodiment of the present application. The mobile power supply device 100 includes a housing 101, a battery pack 102, a driving device 110, a controller 103, and an instruction receiving module 151. The battery pack 102 is disposed inside the housing 101. The housing 101 is provided with at least one socket 104 electrically connected with the battery pack 102. The battery pack 102 can supply electric power to an electric tool 200 during outdoor work through the socket 104. The driving device 110 includes wheels 111 and driving motors 112 for driving the wheels 111. The controller 103 is connected with the driving motors 112. The instruction receiving module 151 is connected with the controller 103. The instruction receiving module 151 is used to receive instructions of the user (i.e., the worker), the controller 103 controls the driving motors 112 to operate according to the instructions received by the instruction receiving module 151, and accordingly the driving motors 112 drive the wheels 111 to rotate, so that the housing 101 is driven to move under the instructions of the user.

As shown in FIG. 13, the mobile power supply device 100 further includes a remote controller 152. The remote controller 152 is matched with the instruction receiving module 151. The instruction receiving module 151 can receive the instructions sent by the user through the remote controller 152. The instruction receiving module 151 sends the received instructions to the controller 103, and the controller 103 controls the driving device 110 to drive the housing 101 to move according to the instructions of the user.

Specifically, the remote controller 152 is carried by the user. When needing the housing 101 to move, the user sends the instructions, such as moving forward, moving back, turning left, or turning right, to the instruction receiving module 151 through the remote controller 152. The instruction receiving module 151 receives these instructions and transfers them to the controller 103, and accordingly the controller 103 controls the driving device 110 to drive the housing 101 to move. In this way, the user only needs to carry the remote controller 152, and remotely controls the housing 101 by using the remote controller 152. Therefore, plug-in type high power electric tool 200 can be used, and no battery is required to install in the electric tool 200, so that the weight of the electric tool 200 is greatly reduced. The quantity of the battery pack 102 in the housing 101 can be selected according to the need of power and consumption of electricity. Since the battery pack 102 does not need manual movement, the labor intensity of the worker is greatly reduced, to thereby solve the problem that the battery pack 102 is too heavy and inconvenient to carry. Since the mobile power supply device 100 can move on its own, it can be used conveniently for power supply to various electric tools 200 during outdoor work.

For other structures of the embodiment of FIG. 13, reference can be made to the above, and they are omitted here for clarity.

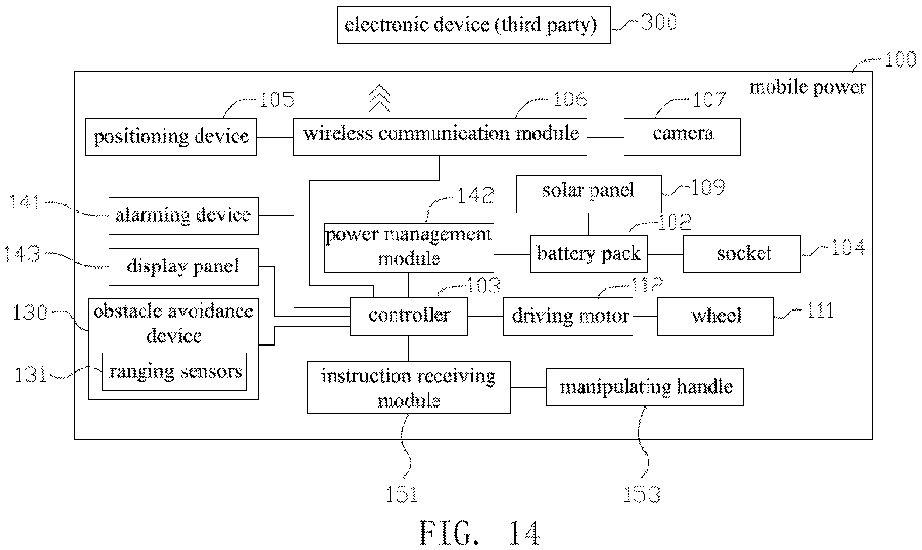

FIG. 14 provides a mobile power supply device 100 for outdoor power supply according to another embodiment. The mobile power supply device 100 includes a housing 101, a battery pack 102, a driving device 110, a controller 103, and an instruction receiving module 151. The battery pack 102 is disposed inside the housing 101. The housing 101 is provided with at least one socket 104 electrically connected with the battery pack 102. The battery pack 102 can supply electric power to an electric tool 200 during outdoor work through the socket 104. The driving device 110 includes wheels 111 and driving motors 112 for driving the wheels 111. The controller 103 is connected with the driving motors 112. The instruction receiving module 151 is connected with the controller 103. The instruction receiving module 151 is configured to receive the instructions of the user (i.e., the worker), the controller 103 controls the driving motors 112 to operate according to the instructions received by the instruction receiving module 151, and accordingly the driving motors 112 drive the wheels 111 to rotate, so that the housing 101 is driven to move under the instructions of the user.

As shown in FIG. 14, the mobile power supply device 100 further includes a manipulating handle 153. The manipulating handle 153 is provided on the housing 101. The manipulating handle 153 is connected with the instruction receiving module 151. The instruction receiving module 151 can receive the instructions sent by the user through the manipulating handle 153. The instruction receiving module 151 then sends the received instructions to the controller 103, and the controller 103 controls the driving device 110 to drive the housing 101 to move according to the instructions of the user.

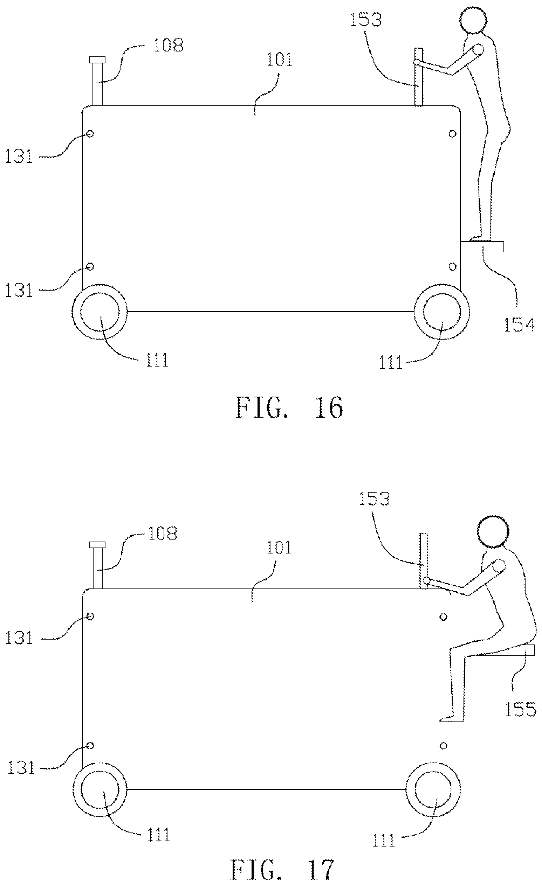

Referring to FIGs. 16-17, the manipulating handle 153 is provided on, for example, the top surface of the housing 101 to facilitate manipulations for the user. The manipulating handle 153 can be provided independently, or be integrated with the above mounting pole 108.

Further, the mobile power supply device 100 further includes a pedal plate 154, and the pedal plate 154 is provided on the housing 101 for the user to stand on (as shown in FIG. 16). Alternatively, the mobile power supply device 100 further includes a seat plate 155, and the seat plate 155 is provided on the housing 101 for the user to sit on (as shown in FIG. 17). When needing the housing 101 to move, the user sends the instructions, such as moving forward, moving back, turning left, or turning right, to the instruction receiving module 151 through the manipulating handle 153. The instruction receiving module 151 receives these instructions and transfers them to the controller 103, and accordingly the controller 103 controls the driving device 110 to drive the housing 101 to move. In this way, the user only needs to stand on the pedal plate 154 or sit on the seat plate 155 to manually manipulate the manipulating handle 153, to directly control the housing 101 to move by using the manipulating handle 153. Therefore, plug-in type high power electric tool 200 can be used, and no battery is required to install in the electric tool 200, so that the weight of the electric tool 200 is greatly reduced. The quantity of the battery pack 102 in the housing 101 can be selected according to the need of power and consumption of electricity. Since the battery pack 102 does not need manual movement, the labor intensity of the worker is greatly reduced, to thereby solve the problem that the battery pack 102 is too heavy and inconvenient to carry. Since the mobile power supply device 100 can move on its own, it can be used conveniently for power supply to various electric tools 200 during outdoor work. Further, in this embodiment, when the user is tired after finishing the outdoor work, the user can return home by riding the housing 101, which is very convenient and can reduce tiredness for the user.

For other structures of the embodiment of FIG. 14, reference can be made to the above, and they are omitted here for clarity.

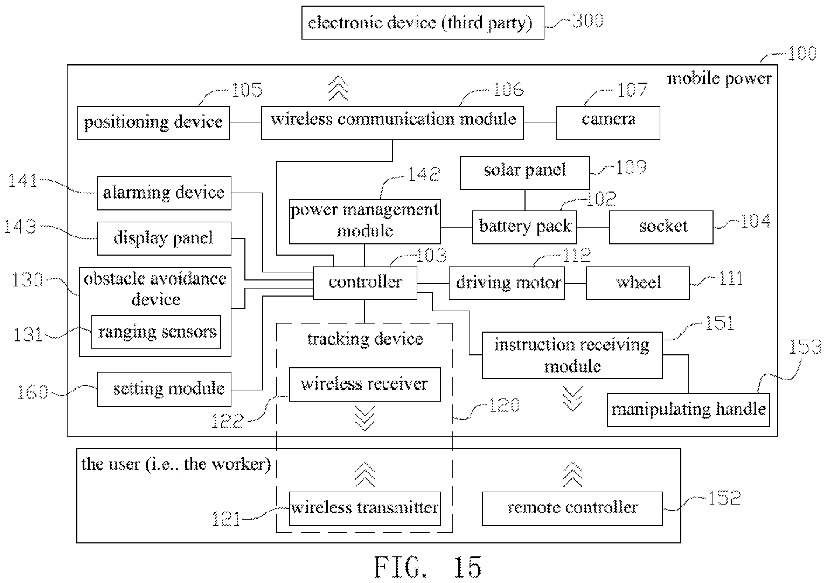

FIG. 15 provides a mobile power supply device 100 for outdoor power supply according to a further embodiment. The mobile power supply device 100 is integrated with all of the functions of the embodiments of FIG. 7, FIG. 13 and FIG. 14. That is, the mobile power supply device 100 includes a tracking device 120, an obstacle avoidance device 130, an instruction receiving module 151, a remote controller 152, and a manipulating handle 153. Further, the mobile power supply device 100 includes a setting module 160 configured for the user to set the moving mode of the mobile power supply device 100. The moving mode of the mobile power supply device 100 includes automatic tracking mode and manual manipulation mode. When the mobile power supply device 100 is set with the automatic tracking mode by the setting module 160, the controller 103 controls the housing 101 to automatically follow the user according to the detecting result of the tracking device 120. When the mobile power supply device 100 is set with the manual manipulation mode by the setting module 160, the controller 103 controls the housing 101 to move under the manipulations of the user according to the instructions received by the instruction receiving module 151. Therefore, the user can select the automatic tracking mode or the manual manipulation mode by the setting module 160 according to actual requirement. For example, during the outdoor work, the user can choose the automatic tracking mode for the roads with good road condition, such that the housing 101 can follow the user automatically, without the need of manipulating the housing 101 to move by the user. For the roads with poor road condition, the user can choose the manual manipulation mode, such that the user can manually select the moving paths of the housing 101 to improve the moving efficiency. In addition, after finishing the outdoor work, the user can also choose the manual manipulation mode, such that the user can return home by riding the housing 101, which is very convenient and can reduce tiredness for the user.

Further, the mobile power supply device 100 further includes a power management module 142 configured for calculating the remaining endurance capacity of the battery pack 102 according to the electricity consumption rate and the residual electricity amount. The remaining endurance capacity of the battery pack 102 can be represented by the remaining mileage or the rest time capable of suppling power.

Further, the mobile power supply device 100 further includes a display panel 143. The display panel 143 can be provided on a surface of the housing 101, as shown in FIG. 1. The display panel 143 can be used to display the electricity consumption status of the battery pack 102, the moving mode of the mobile power supply device 100, and the working state of various components.

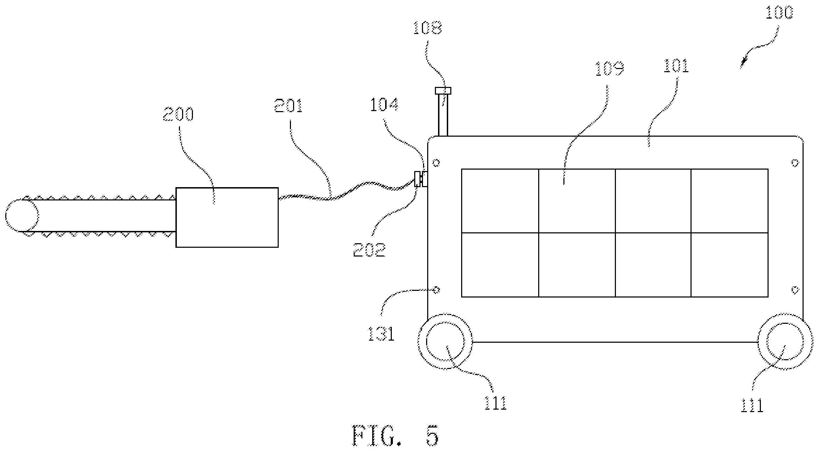

As shown in FIG. 5, when the mobile power supply device 100 is used in the outdoors, the electric tool 200 is connected to the socket 104 of the mobile power supply device 100 through cable 201 and plug 202, so that the mobile power supply device 100 can supply power for the electric tool 200 during outdoor work. Specifically, the electric tool 200 may be electric saws, blowers, pumps, lawn mowers, etc.

The above are embodiments of the present application only, and should not be deemed as limitations to the present application. Although the present application has been disclosed in embodiments as above, it is not intended to limit the present application. It should be noted that variations and improvements will become apparent to those skilled in the art to which the present application pertains. Therefore, the scope of the present application is defined by the appended claims.

### Industrial Applicability

The mobile power supply device provided by the embodiments of the present application can automatically follow the user or can move under the manipulations of the user. Therefore, plug-in type high power electric tool can be used, and no battery is required to install in the electric tool, so that the weight of the electric tool is greatly reduced. The quantity of the battery pack in the housing can be selected according to the need of power and consumption of electricity. Since the battery pack does not need manual movement, the labor intensity of the worker is greatly reduced, to thereby solve the problem that the battery pack is too heavy and inconvenient to carry. Since the mobile power supply device can move on its own, it can be used conveniently for power supply to various electric tools during outdoor work.

## Claims

1. A mobile power supply device (100) for outdoor power supply, comprising a housing (101), a battery pack (102), a driving device (110), a controller (103) and a tracking device (120), wherein the battery pack (102) is disposed inside the housing (101), the housing (101) is provided with at least one socket (104) electrically connected with the battery pack (102), the driving device (110) includes wheels (111) and driving motors (112) for driving the wheels (111), the controller (103) is connected with the driving motors (112), the tracking device (120) is connected with the controller (103), **characterized in that** the battery pack (102) is used to supply electric power to an electric tool (200) which is an electric saw, a blower, a pump or an electric lawn mower during outdoor work through the at least one socket (104), the tracking device (120) is used to track a user of the mobile power supply device (100), the controller (103) is configured to control the driving device (110) to drive the housing (101) to automatically follow the user according to the tracking result of the tracking device (120).

2. The mobile power supply device (100) of claim **1**, wherein the tracking device (120) includes a wireless transmitter (121) and a wireless receiver (122), one of the wireless transmitter (121) and the wireless receiver (122) is adapted to be carried by the user, the other one of the wireless transmitter (121) and the wireless receiver (122) is carried by the housing (101), the wireless receiver (122) is adapted to receive the signals sent from the wireless transmitter (121), the tracking device (120) is adapted to detect a distance between the housing (101) and the user based on the signal intensity received by the wireless receiver (122) to realize tracking the user automatically.

3. The mobile power supply device (100) of claim **2**, wherein the wireless transmitter (121) is adapted to be carried by the user, the wireless receiver (122) is carried by the housing (101).

4. The mobile power supply device (100) of claim **1**, wherein the tracking device (120) includes a camera (107), the camera (107) is used to capture the images of the user to realize tracking the user automatically through image recognition.

5. The mobile power supply device (100) of claim **1**, wherein the mobile power supply device (100) further comprises an obstacle avoidance device (130), the obstacle avoidance device (130) is connected with the controller (103), the obstacle avoidance device (130) is used to detect the obstacles existed in a surrounding environment of the housing (101), the controller (103) is adapted to control the housing (101) to keep away from the obstacles according to the detecting result of the obstacle avoidance device (130).

6. The mobile power supply device (100) of claim **5**, wherein the obstacle avoidance device (130) includes a plurality of ranging sensors (131), and the ranging sensors (131) are distributed over the outer surfaces of the housing (101).

7. The mobile power supply device (100) of claim **1**, wherein the mobile power supply device (100) further comprises an instruction receiving module (151), the instruction receiving module (151) is connected with the controller (103), the instruction receiving module (151) is used to receive instructions of the user, the controller (103) is adapted to control the driving device (110) to drive the housing (101) to move according to the instructions received by the instruction receiving module (151).

8. The mobile power supply device (100) of claim **7**, wherein a remote controller (152) is configured to be matched with the instruction receiving module (151), the instruction receiving module (151) is adapted to receive the instructions sent by the user through the remote controller (152), the instruction receiving module (151) is adapted to send the received instructions to the controller (103), the controller (103) is adapted to control the driving device (110) to drive the housing (101) to move according to the instructions of the user.

9. The mobile power supply device (100) of claim **7**, wherein the mobile power supply device (100) further comprises a manipulating handle (153), the manipulating handle (153) is provided on the housing (101), the manipulating handle (153) is connected with the instruction receiving module (151), the instruction receiving module (151) is adapted to receive the instructions sent by the user through the manipulating handle (153), the instruction receiving module (151) is adapted to send the received instructions to the controller (103), the controller (103) is adapted to control the driving device (110) to drive the housing (101) to move according to the instructions of the user.

10. The mobile power supply device (100) of claim **7**, wherein the mobile power supply device (100) further comprises a setting module (160) configured for the user to set the moving mode of the mobile power supply device (100), the moving mode of the mobile power supply device (100) includes automatic tracking mode and manual manipulation mode, when the mobile power supply device (100) is set with the automatic tracking mode by the setting module (160), the controller (103) is adapted to control the housing (101) to automatically follow the user according to the detecting result of the tracking device (120), when the mobile power supply device (100) is set with the manual manipulation mode by the setting module (160), the controller (103) is adapted to control the housing (101) to move under the manipulations of the user according to the instructions received by the instruction receiving module (151).

11. The mobile power supply device (100) of claim **7**, wherein the mobile power supply device (100) further comprises a pedal plate (154), the pedal plate (154) is provided on the housing (101) for the user to stand on.

12. The mobile power supply device (100) of claim **7**, wherein the mobile power supply device (100) further comprises a seat plate (155), the seat plate (155) is provided on the housing (101) for the user to sit on.

13. The mobile power supply device (100) of claim **1**, wherein the housing (101) is defined with a storage tank (146) for accommodating articles including the electric tool (200).

14. A system comprising an electric tool (200) and a mobile power supply device (100) according to any one of claims **1** to **13**, wherein the electric tool (200) is an electric saw, a blower, a pump or an electric lawn mower, and the mobile power supply device (100) is used for supplying power to the electric tool (200) during outdoor work when the electric tool (200) is connected to the at least one socket (104).

## Patentansprüche

1. Mobiles Stromversorgungsgerät (100) zur Stromversorgung im Freien, umfassend ein Gehäuse (101), einen Akkusatz (102), eine Antriebsvorrichtung (110), eine Steuerung (103) und eine Verfolgungsvorrichtung (120), wobei der Akkusatz (102) innerhalb des Gehäuses (101) angeordnet ist, das Gehäuse (101) mit mindestens einer Steckdose (104) versehen ist, die elektrisch mit dem Akkusatz (102) verbunden ist, die Antriebsvorrichtung (110) Räder (111) und Antriebsmotoren (112) zum Antreiben der Räder (111) umfasst, die Steuerung (103) mit den Antriebsmotoren (112) verbunden ist, die Verfolgungsvorrichtung (120) mit der Steuerung (103) verbunden ist, **dadurch gekennzeichnet, dass** der Akkusatz (102) dazu dient, ein Elektrowerkzeug (200), das eine Elektrosäge, ein Gebläse, eine Pumpe oder ein Elektrorasenmäher ist, bei Arbeiten im Freien über mindestens eine Steckdose (104) mit elektrischer Energie zu versorgen, wobei die Verfolgungsvorrichtung (120) verwendet wird, um den Benutzer des mobilen Stromversorgungsgeräts (100) zu verfolgen, wobei die Steuerung (103) dazu konfiguriert ist, die Antriebsvorrichtung (110) zu steuern, um das Gehäuse (101) anzutreiben, um dem Benutzer gemäß dem Verfolgungsergebnis der Verfolgungsvorrichtung (120) automatisch zu folgen.

2. Mobiles Stromversorgungsgerät (100) nach Anspruch 1, wobei die Verfolgungsvorrichtung (120) einen drahtlosen Sender (121) und einen drahtlosen Empfänger (122) umfasst, wobei einer von beiden - der drahtlose Sender (121) oder der drahtlose Empfänger (122) - derart gestaltet ist, um vom Benutzer getragen zu werden, wobei der andere von beiden - der drahtlose Sender (121) oder der drahtlose Empfänger (122) - durch das Gehäuse (101) aufgenommen wird, wobei der drahtlose Empfänger (122) gestaltet ist, um die vom drahtlosen Sender (121) gesendeten Signale zu empfangen, die Verfolgungsvorrichtung (120) gestaltet ist, den Abstand zwischen dem Gehäuse (101) und dem Benutzer basierend auf der Signalintensität, die durch den drahtlosen Empfänger (122) empfangen wird, zu erfassen, um ein automatisches Verfolgen des Benutzers zu realisieren.

3. Mobiles Stromversorgungsgerät (100) nach Anspruch 2, wobei der drahtlose Sender (121) gestaltet ist, um vom Benutzer getragen zu werden, wobei der drahtlose Empfänger (122) durch das Gehäuse (101) aufgenommen wird.

4. Mobiles Stromversorgungsgerät (100) nach Anspruch 1, wobei die Verfolgungsvorrichtung (120) eine Kamera (107) umfasst, wobei die Kamera (107) verwendet wird, um die Bilder vom Benutzer aufzunehmen, um eine automatische Verfolgung des Benutzers durch Bilderkennung zu realisieren.

5. Mobiles Stromversorgungsgerät (100) nach Anspruch 1, wobei das mobile Stromversorgungsgerät (100) ferner eine Hindernisvermeidungsvorrichtung (130) umfasst, wobei die Hindernisvermeidungsvorrichtung (130) mit der Steuerung (103) verbunden ist, die Hindernisvermeidungsvorrichtung (130) verwendet wird, um die in der Umgebung des Gehäuses (101) vorhandenen Hindernisse zu erkennen, die Steuerung (103) gestaltet ist, das Gehäuse (101) zu steuern, um sich von den Hindernissen gemäß dem Erfassungsergebnis der Hindernisvermeidungsvorrichtung (130) fernzuhalten.

6. Mobiles Stromversorgungsgerät (100) nach Anspruch 5, wobei die Hindernisvermeidungsvorrichtung (130) mehrere Entfernungssensoren (131) umfasst und die Entfernungssensoren (131) über die Außenflächen des Gehäuses (101) verteilt sind.

7. Mobiles Stromversorgungsgerät (100) nach Anspruch 1, wobei das mobile Stromversorgungsgerät (100) ferner ein Anweisungsempfangsmodul (151) umfasst, wobei das Anweisungsempfangsmodul (151) mit der Steuerung (103) verbunden ist, die Anweisungsempfangsmodul (151) verwendet wird, um Anweisungen des Benutzers zu empfangen, die Steuerung (103) gestaltet ist, um die Antriebsvorrichtung (110) zu steuern, um das Gehäuse (101) anzutreiben, um sich gemäß den Anweisungen, die durch das Anweisungsempfangsmodul (151) empfangen werden, zu bewegen.

8. Mobiles Stromversorgungsgerät (100) nach Anspruch 7, wobei eine Fernsteuerung (**152**) so konfiguriert ist, dass sie mit dem Anweisungsempfangsmodul (151) abgestimmt ist, wobei das Anweisungsempfangsmodul (151) gestaltet ist, um die vom Benutzer gesendeten Anweisungen durch die Fernsteuerung (152) zu empfangen, das Anweisungsempfangsmodul (151) gestaltet ist, um die empfangenen Anweisungen an die Steuerung (103) zu senden, die Steuerung (103) gestaltet ist, die Antriebsvorrichtung (110) zu steuern, um das Gehäuse (101) anzutreiben sich gemäß den Anweisungen des Benutzers zu bewegen.

9. Mobiles Stromversorgungsgerät (100) nach Anspruch 7, wobei das mobile Stromversorgungsgerät (100) ferner einen Betätigungsgriff (153) umfasst, wobei der Betätigungsgriff (153) am Gehäuse (101) vorgesehen ist, wobei der Betätigungsgriff (153 ) mit dem Anweisungsempfangsmodul (151) verbunden ist, das Anweisungsempfangsmodul (151) gestaltet ist, die vom Benutzer durch den Betätigungsgriff (153) gesendeten Anweisungen zu empfangen, das Anweisungsempfangsmodul (151) gestaltet ist, die empfangenen Anweisungen an die Steuerung (103) zu senden, wobei die Steuerung (103) gestaltet ist, die Antriebsvorrichtung (110) zu steuern, um das Gehäuse (101) anzutreiben, sich gemäß den Anweisungen des Benutzers zu bewegen.

10. Mobiles Stromversorgungsgerät (100) nach Anspruch 7, wobei das mobile Stromversorgungsgerät (100) ferner ein Einstellmodul (160) umfasst, das für den Benutzer konfiguriert ist, um den Bewegungsmodus des mobilen Stromversorgungsgeräts (100) einzustellen, wobei der Bewegungsmodus des mobilen Stromversorgungsgeräts (100) einen automatischen Verfolgungsmodus und einen manuellen Bedienungsmodus umfasst, wobei wenn das mobile Stromversorgungsgerät (100) durch das Einstellmodul (160) auf den automatischen Verfolgungsmodus eingestellt ist, wird die Steuerung (103) angepasst, das Gehäuse (101) so zu steuern, dass es dem Benutzer gemäß dem Erfassungsergebnis der Verfolgungsvorrichtung (120) automatisch folgt, und wenn das mobile Stromversorgungsgerät (100) durch das Einstellmodul (160) auf den manuellen Bedienungsmodus eingestellt wird, wird die Steuerung (103) angepasst, das Gehäuse (101) so zu steuern, dass es sich unter der Bedienung des Benutzers gemäß den Anweisungen, die vom Anweisungsempfangsmodul (151) empfangen werden, bewegt.

11. Mobiles Stromversorgungsgerät (100) nach Anspruch 7, wobei das mobile Stromversorgungsgerät (100) ferner eine Stufenplatte (154) umfasst, wobei die Stufenplatte (154) am Gehäuse (101) vorgesehen ist, damit der Benutzer darauf stehen kann.

12. Mobiles Stromversorgungsgerät (100) nach Anspruch 7, wobei das mobile Stromversorgungsgerät (100) ferner eine Sitzplatte (155) umfasst, wobei die Sitzplatte (155) am Gehäuse (101) vorgesehen ist, damit der Benutzer darauf sitzen kann.

13. Mobiles Stromversorgungsgerät (100) nach Anspruch 1, wobei das Gehäuse (101) mit einem Stauraum (146) zur Aufbewahrung von Artikeln einschließlich des Elektrowerkzeugs (200) definiert ist.

14. System umfassend ein Elektrowerkzeug (200) und ein mobiles Stromversorgungsgerät (100) nach einem der Ansprüche 1 bis 13, wobei das Elektrowerkzeug (200) eine elektrische Säge, ein Gebläse, eine Pumpe oder ein elektrischer Rasenmäher ist und das mobile Stromversorgungsgerät (100) zur Stromversorgung des Elektrowerkzeugs (200) bei Arbeiten im Freien dient, wenn das Elektrowerkzeug (200) an mindestens einer Steckdose (104) angeschlossen ist.

## Revendications

1. Un dispositif d'alimentation électrique mobile (100) pour alimentation électrique extérieure, comprenant un boîtier (101), un bloc de batterie (102), un dispositif d'entraînement (110), un contrôleur (103) et un dispositif de suivi (120), dans lequel le bloc de batterie (102) est disposé à l'intérieur du boîtier (101), le boîtier (101) est pourvu d'au moins une douille (104) connectée électriquement au bloc de batterie (102), le dispositif d'entraînement (110) comprend des roues (111) et des moteurs d'entraînement (112) pour entraîner les roues (111), le contrôleur (103) est connecté aux moteurs d'entraînement (112), le dispositif de suivi (120) est connecté au contrôleur (103), **caractérisé en ce que** le bloc de batterie (102) est utilisé pour alimenter électriquement un outil électrique (200) qui est une scie électrique, un souffleur, une pompe ou une tondeuse à gazon électrique lors de travaux extérieurs à travers au moins une prise (104), le dispositif de repérage (120) est utilisé pour suivre un utilisateur du dispositif d'alimentation électrique mobile (100), le contrôleur (103) est configuré pour commander le dispositif d'entraînement (110) pour entraîner le boîtier (101) afin de suivre automatiquement l'utilisateur selon le résultat de suivi du dispositif de suivi (120) .

2. Le dispositif d'alimentation électrique mobile (100) selon la revendication **1**, dans laquelle le dispositif de suivi (120) comprend un émetteur sans fil (121) et un récepteur sans fil (122), un des émetteurs sans fil (121) et le récepteur sans fil (122) est adapté pour être porté par l'utilisateur, l'autre émetteur sans fil (121) et le récepteur sans fil (122) est porté par le boîtier (101), le récepteur sans fil (122) est adapté pour recevoir les signaux envoyés par l'émetteur sans fil (121), le dispositif de suivi (120) est adapté pour détecter une distance entre le boîtier (101) et l'utilisateur, sur la base de l'intensité du signal reçu par le récepteur sans fil (122), réalise automatiquement le suivi de l'utilisateur.

3. Le dispositif d'alimentation électrique mobile (100) selon la revendication **2**, dans laquelle l'émetteur sans fil (121) est adapté pour être porté par l'utilisateur, le récepteur sans fil (122) est porté par le boîtier (101).

4. Le dispositif d'alimentation électrique mobile (100) selon la revendication **1,** dans laquelle le dispositif de suivi
(120) comprend une caméra (107), la caméra (107) est utilisée pour capturer les images de l'utilisateur afin de réaliser automatiquement le suivi de l'utilisateur par reconnaissance d'image.

5. Le dispositif d'alimentation électrique mobile (100) selon la revendication **1**, dans laquelle le dispositif d'alimentation électrique mobile (100) comprend en outre un dispositif d'évitement d'obstacles (130), le dispositif d'évitement d'obstacles (130) est connecté au contrôleur (103), le dispositif d'évitement d'obstacles (130) est utilisé pour détecter les obstacles existant dans un environnement environnant le boitier (101), le contrôleur (103) est adapté pour commander le boitier (101) pour s'éloigner des obstacles selon le résultat de détection du dispositif d'évitement d'obstacles (130).

6. Le dispositif d'alimentation électrique mobile (100) selon la revendication **5**, dans laquelle le dispositif d'évitement d'obstacles (130) comprend une pluralité de capteurs de télémétrie (131), et les capteurs de télémétrie (131) sont répartis sur les surfaces extérieures du boîtier (101).

7. Le dispositif d'alimentation électrique mobile (100) selon la revendication **1**, dans laquelle le dispositif d'alimentation électrique mobile (100) comprend en outre un module de réception d'instructions (151), le module de réception d'instructions (151) est connecté au contrôleur (103), le module de réception d'instructions (151) est utilisé pour recevoir des instructions de l'utilisateur, le contrôleur (103) est adapté pour commander le dispositif d'entraînement (110) pour entraîner le boîtier (101) à se déplacer selon les instructions reçues par le module de réception d'instructions (151).

8. Le dispositif d'alimentation électrique mobile (100) selon la revendication **7**, dans laquelle une télécommande (152) est configurée pour être mise en correspondance avec le module de réception d'instructions (151), le module de réception d'instructions (151) est adapté pour recevoir les instructions envoyées par l'utilisateur via la télécommande (152), le module de réception d'instructions (151) est adapté pour envoyer les instructions reçues au contrôleur (103), le contrôleur (103) est adapté pour commander le dispositif d'entraînement (110) pour entraîner le boîtier (101) à se déplacer selon les instructions de l'utilisateur.

9. Le dispositif d'alimentation électrique mobile (100) selon la revendication **7**, dans laquelle le dispositif d'alimentation électrique mobile (100) comprend en outre une poignée de manipulation (153), la poignée de manipulation (153) est prévue sur le boîtier (101), la poignée de manipulation (153) est reliée au module de réception d'instructions (151), le module de réception d'instructions (151) est adapté pour recevoir les instructions envoyées par l'utilisateur à travers la poignée de manipulation (153), le module de réception d'instructions (151) est adapté pour envoyer les instructions reçues au contrôleur (103), le contrôleur (103) est adapté pour commander le dispositif d'entraînement (110) pour entraîner le boîtier (101) à se déplacer selon les instructions de l'utilisateur.

10. Le dispositif d'alimentation électrique mobile (100) selon la revendication **7**, dans laquelle le dispositif d'alimentation électrique mobile (100) comprend en outre un module de réglage (160) configuré pour que l'utilisateur règle le mode de déplacement du dispositif d'alimentation électrique mobile (100), le mode de déplacement du dispositif d'alimentation électrique mobile (100) comprend un mode de suivi et un mode de manipulation manuelle, lorsque le dispositif d'alimentation électrique mobile (100) est réglé avec le mode de suivi automatique par le module de réglage (160), le contrôleur (103) est adapté pour commander le boîtier (101) pour suivre automatiquement l'utilisateur selon le résultat de détection du dispositif de suivi (120), lorsque le dispositif d'alimentation électrique mobile (100) est réglé sur le mode de manipulation manuelle par le module de réglage (160), le contrôleur (103) est adapté pour commander le boîtier (101) pour se déplacer sous les manipulations de l'utilisateur selon les instructions reçues par le module de réception d'instructions (151).

11. Le dispositif d'alimentation électrique mobile (100) selon la revendication **7**, dans laquelle le dispositif d'alimentation électrique mobile (100) comprend en outre une plaque de pédale (154), la plaque de pédale (154) est prévue sur le boîtier (101) pour que l'utilisateur puisse se tenir dessus.

12. Le dispositif d'alimentation électrique mobile (100) selon la revendication **7**, dans laquelle le dispositif d'alimentation électrique mobile (100) comprend en outre une plaque de siège (155), la plaque de siège (155) est prévue sur le boîtier (101) pour que l'utilisateur puisse s'asseoir dessus.

13. Le dispositif d'alimentation électrique mobile (100) selon la revendication **1**, dans laquelle le boîtier (101) est défini avec un réservoir de stockage (146) pour loger des articles comprenant l'outil électrique (200).

14. Le système comprenant un outil électrique (200) et un dispositif d'alimentation électrique mobile (100) selon n'importe quelle des revendications **1 à 13,** dans laquelle l'outil électrique (200) est une scie électrique, un souffleur, une pompe ou une tondeuse à gazon électrique, et le dispositif d'alimentation électrique mobile (100) est utilisé pour alimenter l'outil électrique (200) pendant un travail extérieur lorsque l'outil électrique (200) est connecté à au moins une douille (104).
